# FASCICULE DE BREVET EUROPEEN

(11) **EP 0 979 165 B1**
(45) Date de publication et mention de la délivrance du brevet: **03.03.2004**
(21) Numéro de dépôt: 98922894.5
(22) Date de dépôt: 29.04.1998
(51) Int. Cl.: B29D 31/515, A43B 23/16

(54) **EMBOUTS POUR CHAUSSURES DE SECURITE EN MATIERE PLASTIQUE COMPOSITE ET LEUR PROCEDE DE FABRICATION**
ZEHENKAPPE FÜR SICHERHEITSSCHUHE AUS KUNSTOFF-KOMPOSIT MATERIAL UND VERFAHREN ZU DEREN HERSTELLUNG
COMPOSITE PLASTIC MATERIAL TOE CAPS FOR SECURITY SHOES, AND FABRICATION PROCESS

(30) Priorité: 30.04.1997 FR 9705378; 06.05.1997 FR 9705535
(43) Date de publication de la demande: 16.02.2000
(73) Titulaire: JALLATTE S.A., F-30170 Saint-Hippolyte-du-Fort (FR)
(72) Inventeur: CARMIER, Jean, F-78500 Sartrouville (FR); CREYSSON, Olivier, F-78480 Verneuil sur Seine (FR)
(74) Mandataire: Laget, Jean-Loup
(86) Numéro de dépôt international: PCT/FR1998/000860
(87) Numéro de publication internationale: WO 1998/048999

(56) Documents cités:
- GB-A- 1 388 949
- GB-A- 2 050 144
- US-A- 1 817 287
- US-A- 2 685 104
- US-A- 3 975 840
- US-A- 5 560 985
- PATENT ABSTRACTS OF JAPAN vol. 018, no. 451 (C-1241), 23 août 1994 & JP 06 141908 A (MIDORI ANZEN CO LTD), 24 mai 1994

## Description

La présente invention a pour objet un procédé de fabrication d'embouts, en particulier de sécurité et/ou de protection, en matière plastique composite destinés à être mis en oeuvre ultérieurement à l'intérieur d'articles chaussants, en particulier de sécurité et/ou de protection, lesdits embouts étant constitués de fibres organiques et/ou minérales liées par une résine thermoplastique ou thermodurcissable.

Ces embouts de sécurité sont destinés à être utilisés, en particulier, dans des articles chaussants de protection et/ou de sécurité tels qu'ils sont définis selon les normes européennes (EN 344-345-346), japonaises (JIS T 8101) ou américaines (ANSI Z41-1991).

A la place d'embouts de sécurité métalliques, il est connu de réaliser des embouts non métalliques qui sont non magnétiques, isolants électriques et thermiques et présentent un poids faible de manière à améliorer le confort des utilisateurs. Ce type d'embouts non métalliques fait appel à une grande diversité de matériaux de renfort tels que des fibres sous forme de bandes, mats ou tissage de fibres qui sont imprégnés ou recouverts de résine thermoplastique ou thermodurcissable.

Bon nombre de ces embouts sont obtenus par association de différents renforts fibreux.

Ainsi, il est connu d'obtenir ce type d'embout composite par compression de tissus hybrides composés par exemple de fibres synthétiques en résine thermoplastique et de fibres inorganiques (EP-A-0 528 249), par thermoformage de structures multicouches complexes constituées par exemple à partir de fibres de verre longues tissées et courtes non tissées au sein d'une matrice thermoplastique (EP-A-0 614 623), par empilement de plusieurs couches de tissu imprégné de résine thermodurcissable (GB-A-2 050 144), par compression de fibres métalliques tissées au sein d'un complexe composite de fibres de verre et d'une matrice thermoplastique (EP-A-0 614 623), par injection de matières thermoplastiques telles qu'un polycarbonate (FR-A-2 525 443), un polypropylène, un polyuréthanne (EP-A-0 617 582), un polyamide (FR-A-2 572 259), un ABS (GB-A-1 284 736), etc., chargées ou non de fibres, ou encore par compression de bandes préformées constituées de fibres unidirectionnelles dans une matrice thermoplastique (EP-A-0 100 181).

Le plus souvent, ces embouts composites non métalliques relèvent de fabrications relativement complexes.

US-A-3 975 840 a même proposé de réaliser directement une chaussure de sport ayant une grande résistance et présentant une rigidité dans des zones prédéterminées. Ainsi, ce document propose de réaliser un insert de renfort directement en forme du pied enrobé dans le matériau constitutif de la coque externe. Ce procédé de fabrication, qui permet d'obtenir en une seule opération un article chaussant plus particulièrement adapté pour la pratique d'un sport tel que le ski ou le patinage, n'enseigne en aucun cas la manière d'obtenir un embout composite pour chaussures de sécurité destiné à être mis en oeuvre ultérieurement dans un article chaussant.

Suivant la nature de la résine et des renforts ou empilements fibreux choisis, les embouts sont le plus souvent fabriqués par moulage par compression, par thermoformage ou par injection de résines thermoplastiques ou thermodurcissables.

Ainsi, on connaît par JP-A-06141908 un embout de sécurité de faible poids obtenu en empilant une pluralité de feuilles de résine thermoplastique contenant des fibres longues alignées selon une direction, les feuilles étant empilées de sorte qu'on obtient des fibres dans plusieurs directions et cet empilage est ensuite chauffé et pressé pour former une couche de résine renforcée par des fibres multidirectionnelles, cette couche étant ensuite mise en forme par moulage.

On connaît également, par US-A-5 560 985, un matériau en couche ayant une structure en sandwich obtenue à partir d'une couche de résine thermoplastique renforcée par des fibres sous forme de tissé ou de réseau maillé et d'une couche de résine thermoplastique renforcée par des fibres à l'aide de mats. Ces couches servent pour l'une de noyau au matériau et pour l'autre de couches superficielles et vice versa. Un tel matériau en couche permet de fabriquer un embout de sécurité par moulage en chauffant ledit matériau sous pression.

Ces procédés s'avèrent peu économiques pour la fabrication d'embouts dans la mesure où ils nécessitent l'emploi de deux moules unitaires droit et gauche et peuvent également poser des problèmes de faisabilité de par la petite taille desdits embouts à fabriquer, en particulier du fait du rapport profondeur/largeur des pièces.

En outre, les exigences européennes (normes EN 344, 345, 346), japonaises (JIS T 8101) ou américaines (ANSI Z41-1991) concernant la protection devant être offerte par de tels embouts en remplacement d'embouts métalliques et, en particulier, une résistance au choc d'au moins 200 J et une résistance à l'écrasement de 15 KN ne peuvent pas être atteintes de manière satisfaisante avec les embouts évoqués ci-dessus.

En effet, afin d'atteindre de telles performances mécaniques, il est nécessaire de prévoir, pour fabriquer un embout de ce type, des épaisseurs de matériaux qui interdisent la possibilité de substituer ces embouts non métalliques aux embouts métalliques directement sur les chaînes de fabrication. En outre, de telles surépaisseurs des embouts nuisent à l'esthétique et au confort de l'article chaussant et limitent les gains en poids par rapport aux embouts métalliques.

Afin de pallier ces inconvénients, la présente invention a pour objet principal de fabriquer simultanément, de manière simple et économique, une paire d'embouts (droit et gauche).

A cet effet, l'invention a pour objet un procédé de fabrication d'embouts en matière plastique composite destinés à être mis en oeuvre ultérieurement à l'intérieur d'articles chaussants, lesdits embouts étant constitués de fibres organiques et/ou minérales liées par une résine thermoplastique ou thermodurcissable, caractérisé en ce qu'on fabrique simultanément en symétrie miroir une paire d'embouts droit et gauche réunis par leurs rétreints, formant surfaces de fixation à une semelle d'article chaussant, dans un moule unique comportant les empreintes des deux embouts et on sépare lesdits embouts au niveau de la liaison entre lesdits rétreints.

La séparation des deux embouts est effectuée au niveau de la liaison par découpe ou par tout autre moyen approprié.

Avantageusement, on évite ainsi tous les problèmes liés au phénomène de drapage résultant de l'embouti profond, la largeur relative étant ainsi doublée.

De préférence, afin de permettre la séparation ultérieure des deux embouts, le moule unique comporte au moins l'empreinte d'une paroi de liaison, entre les deux rétreints adjacents des deux embouts, servant d'écarteur auxdits embouts, on découpe ladite paroi de liaison sensiblement parallèlement aux deux rétreints, après démoulage et durcissement des deux embouts obtenus, et/ou on élimine ladite paroi de liaison par tout moyen approprié, par exemple par meulage, sciage, etc.

De préférence, la paroi de liaison est rectiligne, mais ladite paroi de liaison peut également présenter une forme totalement ou partiellement en arc de cercle.

Selon un premier mode de mise en oeuvre du procédé de l'invention, on réalise un moulage par compression des fibres organiques et/ou minérales préimprégnées par une résine thermoplastique ou thermodurcissable, placées dans le moule unique.

Selon un deuxième mode de mise en oeuvre du procédé selon l'invention, on obtient des embouts composites selon le procédé de l'invention par thermoformage ou par injection de résines thermoplastiques ou thermodurcissables.

Selon un troisième mode de mise en oeuvre préféré de l'invention, on réalise un moulage par transfert de résine thermoplastique ou thermodurcissable (technique RTM « resin transfer moulding »).

De préférence, les fibres minérales et/ou organiques sont sous forme d'empilements fibreux et/ou de couches de fibres constituées par des tissés de fibres et/ou des mats à fibres longues et/ou courtes et/ou de nappes ou de bandes à fils continus. Selon une forme de mise en oeuvre préférée, ce sont des fibres de verre et/ou des fibres d'aramide et/ou des fibres de carbone et/ou des fibres de polyéthylène et/ou toutes autres fibres organiques.

De préférence, la résine thermodurcissable est constituée par une matrice polymère réticulable telle qu'une résine polyester, une résine polyépoxyde, une résine polyuréthanne, une résine vinylester ou encore une résine polyester-uréthanne.

La résine thermoplastique polymérisable in situ dans le moule est constituée, de préférence, d'une résine polyester, d'une résine polyuréthanne, d'une résine polycaprolactane, d'un monomère cyclique ou d'un prépolymère.

En particulier, afin d'atteindre les performance mécaniques telles que celles répondant aux normes européennes, japonaises et américaines évoquées ci-dessus et obtenir un embout de haute résistance présentant une épaisseur satisfaisante tant du point de vue du confort que de l'esthétique de l'article chaussant et lui permettant d'être substitué directement aux embouts métalliques dans les chaînes de fabrication, on met en oeuvre un procédé particulier de moulage par transfert de résine.

Ainsi, on met en place dans le moule unique un insert de renfort préformé constitué d'au moins deux couches de fibres empilées et on enrobe ledit insert de renfort d'une résine thermodurcissable ou thermoplastique amenée dans le moule, ladite résine imprégnant l'insert de renfort.

Avantageusement, on réalise, préalablement au procédé de fabrication, la réalisation d'une ébauche formant insert de renfort en fibres, préformé, dont la mise en forme permet d'obtenir un élément semi-fini rigide.

De préférence, l'insert de renfort est réalisé à partir d'un empilement d'au moins deux couches de fibres, les fibres pouvant être sous forme de tissés et/ou de mats à fibres longues et/ou courtes et/ou de nappes ou de bandes à fils continus.

Ces couches peuvent être de dimensions identiques ou différentes selon les performances recherchées et l'orientation des fibres peut être identique ou différente, par exemple multidirectionnelle.

La composition desdites couches au sein de l'empilement est avantageusement choisie de manière à obtenir des performances mécaniques déterminées. Ainsi, en fonction des caractéristiques mécaniques que l'on souhaite conférer à l'insert de renfort, on peut utiliser uniquement un empilage de tissés, ou bien un empilage de tissés et de mats, ou une combinaison de tissés, de mats et de nappes de fils continus et moduler l'orientation des fibres dans les différentes couches au sein de l'empilement.

Le préformage de l'insert de renfort peut être obtenu par pressage de fibres empilées en couches dans un moule de préformage, ces couches étant préalablement chauffées.

Il est également possible d'obtenir directement l'insert de renfort préformé lors d'une opération de tissage en deux ou trois dimensions d'au moins une ou de l'ensemble des couches élémentaires de fibres.

Avantageusement, afin de conférer à l'insert de renfort préformé des qualités de maintien et de préservation de la forme, en particulier lors du préformage par compression, les fibres sont poudrées d'un liant thermoactivable. Celui-ci est choisi de manière à rester inactif au cours des phases ultérieures du procédé ou, du moins, à ne pas gêner lesdites phases ultérieures du procédé.

L'insert de renfort préformé constitue un produit semi-fini qui peut être avantageusement traité directement selon les étapes de mise en oeuvre du procédé selon l'invention ou si nécessaire, stocké en attente. L'invention a donc également pour objet un insert de renfort préformé.

Cet insert de renfort est mis en place dans le moule unique et est ensuite enrobé d'une résine thermodurcissable ou thermoplastique réagissant sous l'effet de la chaleur dans le moule, la résine thermodurcissable étant réticulable et la résine thermoplastique polymérisable in situ dans le moule.

Selon une première variante, on met en place l'insert de renfort dans le moule d'injection unique chauffé et régulé en température dans lequel est injectée à basse pression une résine thermodurcissable ou thermoplastique propre à imprégner ledit insert de renfort. De préférence, la pression d'injection se situe dans une plage de 1 à 10 bars, plus particulièrement de 1 à 3 bars.

Selon une seconde variante, l'insert de renfort est introduit dans le moule unique dans lequel on vient ensuite couler une quantité appropriée de résine thermodurcissable ou thermoplastique. Le moule chauffé et régulé en température est ensuite fermé. La résine vient alors imprégner par compression l'insert de renfort puis réagit sous l'action de la chaleur.

Pour ces deux variantes, il peut être envisagé d'avoir recours au vide dans le moule afin d'éliminer au maximum la présence de porosité dans le produit fini et améliorer ainsi la processabilité.

De préférence, le taux de fibres au sein de la matrice ainsi obtenue est supérieur à 50 % en masse.

Ainsi, le procédé de l'invention permet d'obtenir un ensemble de deux embouts, en particulier de sécurité et/ou de protection, constitué à partir d'un insert de renfort imprégné d'une résine thermodurcissable ou thermoplastique présentant des qualités et des propriétés comparables aux embouts métalliques, sans en présenter les inconvénients, ledit insert imprégné étant ensuite séparé en deux embouts. En particulier, un embout de sécurité et/ou de protection selon ce mode de mise en oeuvre de l'invention présente une épaisseur maximale de 6 mm dans la zone avant et de 2 mm sur le bord arrière.

L'invention a également pour objet un embout, en particulier de sécurité et/ou de protection, obtenu selon le procédé de l'invention ainsi qu'un article chaussant, en particulier de sécurité et/ou de protection, muni d'un tel embout, en particulier un embout de haute résistance.

On décrira maintenant l'invention plus en détail en référence au dessin dans lequel :

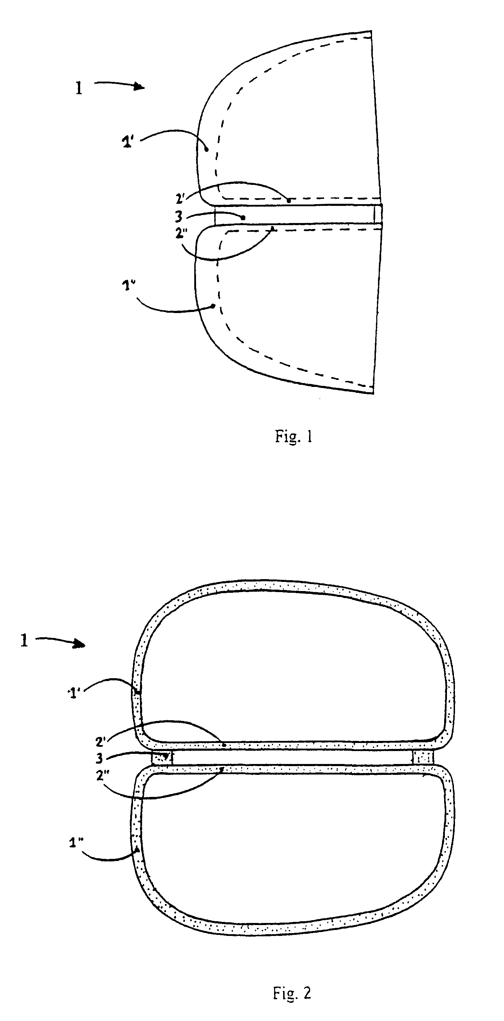

la figure 1 représente une vue latérale des embouts jumelés (droit et gauche) en sortie du moule ; et
la figure 2 représente une vue en coupe des embouts selon la figure 1.

On a mis en place dans un moule unique un insert de renfort préformé constitué d'au moins deux couches de fibres minérales et/ou organiques. On a injecté à basse pression une résine thermodurcissable dans le moule chauffé et régulé en température de manière à imprégner ledit insert de renfort avec la résine.

En sortie du moule, on obtient une paire d'embouts 1 composée d'un embout droit 1' et d'un embout gauche 1'' accolés en symétrie miroir par leurs rétreints horizontaux 2', 2" formant surface de fixation à la semelle d'un article chaussant.

Une paroi de liaison 3 est ménagée entre les deux rétreints 2' et 2", en tant qu'écarteur desdits rétreints de manière à faciliter la séparation ultérieure desdits embouts 1.

De préférence, la paroi de liaison 3 est rectiligne et assure une cohésion suffisante à l'ensemble 1, ce qui facilite la fabrication.

Cette paroi de liaison 3 ne présente pas d'angle vif par rapport aux rétreints 2', 2" afin d'assurer une mise en oeuvre aisée de l'insert dans le moule ce qui permet une meilleure injection de la résine. Dans le cas des autres modes de mise en oeuvre de l'invention, cette absence d'angle vif assure un fluage correct dans le cas d'un thermoformage ou d'un moulage par compression et, de manière générale, elle permet d'éviter toute zone de faiblesse mécanique sur le produit moulé.

Après démoulage de l'ensemble 1 d'embouts 1', 1'', ceux-ci sont séparés par découpe, sciage ou meulage de la paroi de liaison 3 ou par tout autre moyen approprié.

## Revendications

1. Procédé de fabrication d'embouts (1', 1'') en matière plastique composite destinés à être mis en oeuvre ultérieurement à l'intérieur d'articles chaussants, lesdits embouts (1', 1'') étant constitués de fibres organiques et/ou minérales liées par une résine thermoplastique ou thermodurcissable,
**caractérisé en ce qu'**on met en place dans un moule unique un insert de renfort préformé constitué d'un empilement d'au moins deux couches de fibres et on amène dans le moule une résine thermodurcissable ou thermoplastique, ladite résine enrobant l'insert de renfort préformé par imprégnation pour fabriquer simultanément en symétrie miroir une paire d'embouts droit et gauche (1', 1") réunis par leurs rétreints (2', 2''), formant surfaces de fixation à une semelle d'article chaussant, et on sépare lesdits embouts (1', 1") au niveau de la liaison entre lesdits rétreints (2', 2'').

2. Procédé selon la revendication 1,
**caractérisé en ce que** le moule unique comporte outré les empreintes des deux embouts (1', 1") l'empreinte d'une paroi de liaison (3), entre les deux rétreints (2',2") des deux embouts (1', 1"), servant d'écarteur auxdits embouts (1', 1''), on découpe ladite paroi de liaison (3) sensiblement parallèlement aux deux rétreints (2', 2") et/ou on élimine ladite paroi de liaison (3) par tout moyen approprié, par exemple par meulage, sciage, etc.

3. Procédé selon la revendication 2,
**caractérisé en ce que** la paroi de liaison (3) est rectiligne.

4. Procédé selon la revendication 2,
**caractérisé en ce que** la paroi de liaison (3) présente une forme totalement ou partiellement en arc de cercle.

5. Procédé selon l'une des revendications 1 à 4,
**caractérisé en ce que** les fibres minérales et/ou organiques sont sous forme d'empilement fibreux et/ou de couches de fibres constituées par des tissés de fibres et/ou des mats à fibres longues et/ou courtes et/ou de nappes ou de bandes à fils continus.

6. Procédé selon l'une des revendications 1 à 5,
**caractérisé en ce que** les fibres sont des fibres de verre et/ou des fibres d'aramide et/ou des fibres de carbone et/ou des fibres de polyéthylène et/ou toutes autres fibres organiques.

7. Procédé selon l'une des revendications 5 et 6,
**caractérisé en ce que** les fibres sont poudrées d'un liant thermoactivable.

8. Procédé de fabrication selon l'une des revendications 1 à 7,
**caractérisé en ce qu'**on réalise un moulage par compression de fibres organiques et/ou minérales préimprégnées par une résine thermoplastique ou thermodurcissable placées dans le moule unique.

9. Procédé de fabrication selon l'une des revendications 1 à 7,
**caractérisé en ce qu'**on réalise un moulage par transfert de résine thermoplastique ou thermodurcissable.

10. Procédé de fabrication selon l'une des revendications 1 à 9,
**caractérisé en ce que** la résine thermodurcissable est constituée par une matrice polymère réticulable telle qu'une résine polyester, une résine polyépoxyde, une résine polyuréthanne, une résine vinylester ou encore une résine polyester-uréthanne.

11. Procédé de fabrication selon l'une des revendications 1 à 9,
**caractérisé en ce que** la résine thermoplastique polymérisable in situ dans le moule est constituée, de préférence, d'une résine polyester, d'une résine polyuréthanne, d'une résine polycaprolactane, d'un monomère cyclique ou d'un prépolymère.

12. Procédé de fabrication selon l'une des revendications 1 à 11,
**caractérisé en ce que** l'insert de renfort est mis en place dans le moule unique chauffé et régulé en température et dans lequel est injectée à basse pression une résine thermodurcissable ou thermoplastique propre à enrober et imprégner ledit insert de renfort.

13. Procédé selon l'une des revendication 1 à 11,
**caractérisé en ce qu'**on met en place l'insert de renfort dans le moule unique dans lequel on vient ensuite couler une quantité appropriée de résine thermodurcissable ou thermoplastique, le moule, chauffé et régulé en température, étant ensuite fermé, la résine imprégnant par compression l'insert de renfort puis réagissant sous l'action de la chaleur.

14. Procédé selon l'une des revendications 12 et 13,
**caractérisé en ce qu'**on fait le vide dans le moule au cours de l'imprégnation de l'insert de renfort par la résine thermodurcissable ou thermoplastique.

15. Procédé de fabrication selon l'une des revendications 12 à 14,
**caractérisé en ce que** les couches de fibres constituant un insert de renfort présentent, dans l'empilement, une orientation de leurs fibres respectives différente.

16. Procédé selon l'une des revendications 12 à 15,
**caractérisé en ce qu'**on préforme l'insert de renfort par pressage de fibres empilées en couches dans le moule de préformage, lesdites couches étant préalablement chauffées.

17. Procédé selon l'une des revendications 12 à 15,
**caractérisé en ce que** l'insert de renfort est préformé lors de l'opération de tissage en deux ou trois dimensions d'au moins une ou de l'ensemble des couches élémentaires de fibres.

18. Procédé selon l'une des revendications 1 à 17,
**caractérisé en ce que** le taux de fibres au sein de la matrice est supérieur à 50% en masse.

19. Insert de renfort préformé destiné à être utilisé dans un procédé de fabrication d'embouts en matière plastique composite selon les revendications 1 à 18,
**caractérisé en ce qu'**il est préformé par pressage de fibres empilées en couches dans un moule de préformage, lesdites couches étant préalablement chauffées.

20. Insert de renfort préformé destiné à être utilisé dans un procédé de fabrication d'embouts en matière plastique composite selon les revendications 1 à 18,
**caractérisé en ce qu'**il est préformé lors d'une opération de tissage en deux ou trois dimensions d'au moins une ou de l'ensemble des couches élémentaires de fibres.

21. Embout, en particulier de sécurité et/ou de protection, destiné à être mis en oeuvre ultérieurement à l'intérieur d'articles chaussants, constitué de fibres organiques et/ou minérales liées par une résine thermodurcissable ou thermoplastique,
**caractérisé en ce qu'**il comporte un insert de renfort préformé selon l'une des revendications 19 ou 20 présentant un empilement d'au moins deux couches de fibres, ledit insert de renfort étant enrobé et imprégné par une résine thermodurcissable ou thermoplastique.

22. Embout selon la revendication 21,
**caractérisé en ce que** les au moins deux couches de fibres sont empilées de manière à présenter une orientation de fibres différente.

23. Article chaussant, en particulier de sécurité et/ou de protection, du type comportant un embout, en particulier de sécurité et/ou de protection de haute résistance, constitué de fibres organiques et/ou minérales liées par une résine thermodurcissable ou thermoplastique,
**caractérisé en ce qu'**il comporte un embout selon l'une des revendications 21 et 22.

## Patentansprüche

1. Verfahren zur Herstellung von Zehenkappen (1', 1") aus Kunststoff-Kompositmaterial, die dafür vorgesehen sind, später ins Innere von Schuhwaren eingesetzt zu werden, wobei die Zehenkappen (1', 1") aus organischen und / oder mineralischen Fasern, die durch ein thermoplastisches oder wärmeaushärtendes Harz gebunden werden, aufgebaut sind, **dadurch gekennzeichnet, dass** ein vorgeformter Verstärkungseinsatz, der aus einem Stapel von wenigstens zwei Schichten von Fasern gebildet ist, in eine einzige Form eingebracht wird, und dass in die Form ein wärmeaushärtendes oder thermoplastisches Harz eingebracht wird, wobei das Harz den vorgeformten Verstärkungseinsatz durch Tränken imprägniert, um gleichzeitig spiegelsymmetrisch ein Paar rechter und linker Zehenkappen (1', 1") herzustellen, die durch ihre Querschnittsverminderungen (2', 2") verbunden sind, welche Flächen zur Befestigung an einer Sohle der Schuhware bilden, und dass die Zehenkappen (1', 1") im Bereich der Verbindung zwischen den Querschnittsverminderungen (2', 2") getrennt werden.

2. Verfahren nach Anspruch 1, **dadurch gekennzeichnet, dass** die einzige Form neben den Abdrücken der beiden Zehenkappen (1', 1") den Abdruck einer Verbindungswand (3) zwischen den beiden Querschnittsverminderungen (2', 2'') der beiden Zehenkappen (1', 1") enthält, die als Abstandshalter für die Zehenkappen (1', 1'') dient, und dass die Verbindungswand (3) im Wesentlichen parallel zu den beiden Querschnittsverminderungen (2', 2'') abgeschnitten wird und / oder die Verbindungswand (3) durch ein beliebiges geeignetes Mittel, zum Beispiel durch Schleifen, Sägen, etc., entfernt wird.

3. Verfahren nach Anspruch 2, **dadurch gekennzeichnet, dass** die Verbindungswand (3) gerade ist.

4. Verfahren nach Anspruch 2, **dadurch gekennzeichnet, dass** die Verbindungswand (3) vollständig oder teilweise die Form eines Kreisbogens aufweist.

5. Verfahren nach einem der Ansprüche 1 bis 4, **dadurch gekennzeichnet, dass** die mineralischen und / oder organischen Fasern in Form von faserigen Stapeln und / oder Schichten von Fasern, die aus gewebten Fasern und / oder Matten aus langen und / oder kurzen Fasern und / oder aus Vliesen oder Lunten aus Filamentgarnen bestehen.

6. Verfahren nach einem der Ansprüche 1 bis 5, **dadurch gekennzeichnet, dass** die Fasern Glasfasern und / oder Aramidfasern und / oder Kohlefasern und / oder Polyethylenfasern und / oder beliebige andere organische Fasern sind.

7. Verfahren nach einem der Ansprüche 5 oder 6, **dadurch gekennzeichnet, dass** die Fasern mit einem thermoaktivierbaren Bindemittel bepulvert werden.

8. Herstellungsverfahren nach einem der Ansprüche 1 bis 7, **dadurch gekennzeichnet, dass** eine Abformung durch Komprimieren von organischen und / oder mineralischen Fasern bewerkstelligt wird, die durch ein thermoplastisches oder wärmeaushärtendes Harz vorimprägniert sind und in der einzigen Form angeordnet werden.

9. Herstellungsverfahren nach einem der Ansprüche 1 bis 7, **dadurch gekennzeichnet, dass** eine Abformung durch Übertragen von thermoplastischem oder wärmeaushärtendem Harz erzielt wird.

10. Herstellungsverfahren nach einem der Ansprüche 1 bis 9, **dadurch gekennzeichnet, dass** das wärmeaushärtende Harz von einer vernetzbaren Polymer-Matrix, beispielsweise einem Polyester-Harz, einem Polyepoxyd-Harz, einem Polyurethan-Harz, einem Vinylester-Harz oder auch einem Polyester-Urethan-Harz, gebildet wird.

11. Herstellungsverfahren nach einem der Ansprüche 1 bis 9, **dadurch gekennzeichnet, dass** das polymerisierbare thermoplastische Harz in situ in der Form vorzugsweise aus einem Polyester-Harz, einem Polyurethan-Harz, einem Polykaprolakton-Harz, einem zyklischen Monomer oder einem Vorpolymerisat gebildet wird.

12. Herstellungsverfahren nach einem der Ansprüche 1 bis 11, **dadurch gekennzeichnet, dass** der Verstärkungseinsatz in die einzige Form eingebracht wird, welche beheizt und temperaturgeregelt ist und in die ein wärmeaushärtendes oder thermoplastisches Harz mit niedrigem Druck eingespritzt wird, das geeignet ist, den Verstärkungs-Einsatz einzuhüllen und zu tränken.

13. Verfahren nach einem der Ansprüche 1 bis 11, **dadurch gekennzeichnet, dass** der Verstärkungseinsatz in die einzige Form eingebracht wird, in die dann eine geeignete Menge von wärmeaushärtendem oder thermoplastischem Harz gegossen wird, wobei die beheizte und temperaturgeregelte Form dann geschlossen wird, und das Harz, das den Verstärkungseinsatz durch Kompression tränkt, dann unter der Einwirkung der Wärme reagiert.

14. Verfahren nach einem der Ansprüche 12 oder 13, **dadurch gekennzeichnet, dass** in der Form im Verlauf der Tränkung des Verstärkungs-Einsatzes mit dem wärmeaushärtenden oder thermoplastischen Harz ein Vakuum erzeugt wird.

15. Herstellungsverfahren nach einem der Ansprüche 12 bis 14, **dadurch gekennzeichnet, dass** die Schichten von Fasern, die einen Verstärkungseinsatz bilden, eine unterschiedliche Ausrichtung ihrer jeweiligen Fasern aufweisen.

16. Verfahren nach einem der Ansprüche 12 bis 15, **dadurch gekennzeichnet, dass** der Verstärkungseinsatz durch Verpressen von in Schichten gestapelten Fasern in der Form zur Vorformung vorgeformt wird.

17. Verfahren nach einem der Ansprüche 12 bis 15, **dadurch gekennzeichnet, dass** der Verstärkungseinsatz während der Ausführung des Webens in zwei oder drei Dimensionen von wenigstens einer oder einer Menge von Elementarschichten aus Fasern vorgeformt wird.

18. Verfahren nach einem der Ansprüche 1 bis 17, **dadurch gekennzeichnet, dass** der Anteil an Fasern im Inneren der Matrix größer als 50 Massen-% ist.

19. Vorgeformter Verstärkungs-Einsatz, der dafür vorgesehen ist, in einem Verfahren zur Herstellung von Zehenkappen aus Kunststoff-Kompositmaterial nach den Ansprüchen 1 bis 18 verwendet zu werden, **dadurch gekennzeichnet, dass** er durch Verpressen von in Schichten gestapelten Fasern in einer Form zur Vorformung vorgeformt wird, wobei die Schichten zuvor erwärmt werden.

20. Vorgeformter Verstärkungs-Einsatz, der dafür vorgesehen ist, in einem Verfahren zur Herstellung von Zehenkappen aus Kunststoff-Kompositmaterial nach den Ansprüchen 1 bis 18 verwendet zu werden, **dadurch gekennzeichnet, dass** er während einer Ausführung eines Webens in zwei oder drei Dimensionen von wenigstens einer oder einer Menge von Elementar-Schichten aus Fasern vorgeformt wird.

21. Zehenkappe, insbesondere zur Sicherheit und / oder zum Schutz, die dafür vorgesehen ist, später ins Innere von Schuhwaren eingesetzt zu werden, und aus organischen und / oder mineralischen Fasern aufgebaut ist, die durch ein thermoplastisches oder wärmeaushärtendes Harz gebunden werden, **dadurch gekennzeichnet, dass** sie einen Verstärkungseinsatz nach einem der Ansprüche 19 oder 20 umfasst, der einen Stapel aus wenigstens zwei Schichten von Fasern aufweist, wobei der Verstärkungseinsatz von einem wärmeaushärtendem oder thermoplastischem Harz eingehüllt und getränkt wird.

22. Zehenkappe nach Anspruch 21, **dadurch gekennzeichnet, dass** die wenigstens zwei Schichten von Fasern derartig gestapelt sind, dass eine unterschiedliche Ausrichtung der Fasern gebildet ist.

23. Schuhware, insbesondere zur Sicherheit und / oder zum Schutz, mit einer Zehenkappe, insbesondere zur Sicherheit und / oder zum Schutz, mit hoher Festigkeit, die aus organischen und / oder mineralischen Fasern aufgebaut ist, die durch ein thermoplastisches oder wärmeaushärtendes Harz gebunden werden, **dadurch gekennzeichnet, dass** sie eine Zehenkappe nach einem der Ansprüche 21 oder 22 umfasst.

## Claims

1. Method for the manufacture of toecaps (1', 1") made of composite plastic material intended for subsequent use inside footwear, the said toecaps (1', 1'') consisting of organic and/or mineral fibres bonded by a thermoplastic or thermosetting resin,
**characterised in that** a preformed reinforcing insert consisting of a stack of at least two layers of fibres is placed in a single mould and a thermosetting or thermoplastic resin is fed into the mould, the said resin coating the preformed reinforcing insert by impregnation so as simultaneously to produce, in mirror symmetry, a pair of toecaps, right and left (1', 1''), joined via the neckings (2', 2'') thereof forming surfaces for fixing to a sole of an article of footwear, and the said toecaps (1', 1") are separated at the link between the said neckings (2', 2").

2. Method according to Claim 1,
**characterised in that** the single mould also contains the shapes of the two toecaps (1', 1''), the shape of a linking wall (3) between the two neckings (2', 2") of the two toecaps (1', 1") serving as a spacer for the said toecaps (1', 1"), the said linking wall (3) is cut essentially parallel to the two neckings (2', 2'') and/or the said linking wall (3) is removed by any appropriate means, for example by grinding, sawing, etc.

3. Method according to Claim 2,
**characterised in that** the linking wall (3) is rectilinear.

4. Method according to Claim 2,
**characterised in that** the linking wall (3) has a shape completely or partially in the form of an arc of a circle.

5. Method according to one of Claims 1 to 4,
**characterised in that** the mineral and/or organic fibres are in the form of a fibrous stack and/or of layers of fibres made up of woven fibres and/or of mats of long and/or short fibres and/or of sheets or of strips of continuous fibres.

6. Method according to one of Claims 1 to 5,
**characterised in that** the fibres are glass fibres and/or aramide fibres and/or carbon fibres and/or polyethylene fibres and/or any other organic fibres.

7. Method according to one of Claims 5 and 6,
**characterised in that** the fibres are dusted with a binder that can be thermally activated.

8. Method of manufacture according to one of Claims 1 to 7,
**characterised in that** compression moulding of organic and/or mineral fibres pre-impregnated with a thermoplastic or thermosetting resin placed in the single mould is carried out.

9. Method of manufacture according to one of Claims 1 to 7,
**characterised in that** moulding is carried out by transfer of thermoplastic or thermosetting resin.

10. Method of manufacture according to one of Claims 1 to 9,
**characterised in that** the thermosetting resin is made up of a matrix of cross-linkable polymer, such as a polyester resin, a polyepoxide resin, a polyurethane resin, a vinyl ester resin or a polyester-urethane resin.

11. Method of manufacture according to one of Claims 1 to 9,
**characterised in that** the thermoplastic resin that can be polymerised in situ in the mould preferably consists of a polyester resin, a polyurethane resin, a polycaprolactan (sic) resin, a cyclic monomer or a prepolymer.

12. Method of manufacture according to one of Claims 1 to 11,
**characterised in that** the reinforcing insert is placed in the heated and temperature-controlled single mould into which a thermosetting or thermoplastic resin suitable for coating and impregnating the said reinforcing insert is injected at low pressure.

13. Method according to one of Claim (sic) 1 to 11,
**characterised in that** the reinforcing insert is placed in the single mould into which an appropriate quantity of thermosetting or thermoplastic resin is then poured, the heated and temperature-controlled mould then being closed, the resin impregnating the reinforcing insert by compression and then reacting under the action of the heat.

14. Method according to one of Claims 12 and 13,
**characterised in that** vacuum is applied to the mould during the impregnation of the reinforcing insert by the thermosetting or thermoplastic resin.

15. Method of manufacture according to one of Claims 12 to 14,
**characterised in that** the layers of fibres making up the reinforcing insert have a different orientation of their respective fibres in the stack.

16. Method according to one of Claims 12 to 15,
**characterised in that** the reinforcing insert is preformed by pressing fibres stacked in layers in the preforming mould, the said layers being previously heated.

17. Method according to one of Claims 12 to 15,
**characterised in that** the reinforcing insert is preformed during the weaving operation in two or three dimensions of at least one or of the set of elementary layers of fibres.

18. Method according to one of Claims 1 to 17,
**characterised in that** the proportion of fibres within the matrix is greater than 50 % by mass.

19. Preformed reinforcing insert intended to be used in a method for the manufacture of toecaps made of composite plastic material according to Claims 1 to 18,
**characterised in that** it is preformed by pressing fibres stacked in layers in a preforming mould, the said layers being previously heated.

20. Preformed reinforcing insert intended to be used in a method for the manufacture of toecaps made of composite plastic material according to Claims 1 to 18,
**characterised in that** it is preformed during a weaving operation in two or three dimensions of at least one or of the set of elementary layers of fibres.

21. Toecap, in particular safety and/or protective toecap, intended for subsequent use inside footwear, consisting of organic and/or mineral fibres bonded by a thermosetting or thermoplastic resin,
**characterised in that** it comprises a preformed reinforcing insert according to one of Claims 19 or 20 having a stack of at least two layers of fibres, the said reinforcing insert being coated and impregnated by a thermosetting or thermoplastic resin.

22. Toecap according to Claim 21,
**characterised in that** the at least two layers of fibres are stacked so as to have a different orientation of fibres.

23. Footwear, in particular safety and/or protective footwear, of the type containing a toecap, in particular a safety and/or protective toecap of high resistance, made up of organic and/or mineral fibres bonded by a thermosetting or thermoplastic resin,
**characterised in that** it contains a toecap according to one of Claims 21 and 22.
